# DEMANDE DE BREVET EUROPEEN

(11) **EP 0 956 989 A1**
(43) Date de publication de la demande: **17.11.1999**
(21) Numéro de dépôt: 99401156.7
(22) Date de dépôt: 11.05.1999
(51) Int. Cl.: B60J 7/10

(54) **Toit découvrable de véhicule automobile**

(30) Priorité: 15.05.1998 FR 9806165
(71) Demandeur: AUTOMOBILES PEUGEOT, 75116 Paris (FR); AUTOMOBILES CITROEN, 92200 Neuilly-sur-Seine (FR)
(72) Inventeur: James, Edwin, 78670 Villenne-sur-Seine (FR)
(74) Mandataire: Gendraud, Pierre

(57) **Abrégé**

La présente invention concerne les véhicules automobiles et plus spécialement les toits des véhicules automobiles.

C'est un système de couverture de toit de véhicule automobile à la fois modulaire, flexible, léger, peu encombrant et moderne. Ce système de couverture permet également de changer la configuration et donc l'apparence physique du toit suivant la volonté du propriétaire.

Le système de couverture de toit de véhicule automobile selon l'invention est composé d'au moins un support (3) s'étendant depuis la pare-brise en direction de l'arrière du véhicule et d'une couverture (2), caractérisé en ce que les lesdits supports (3) sont au nombre de deux et sont escamotables en totalité ou en partie.

## Description

La présente invention concerne les véhicules automobiles et plus spécialement les toits des véhicules automobiles.

On cherche à rendre certains véhicules de loisirs d'aujourd'hui, en particulier les véhicules dits "de plage", facilement découvrables: le système de couverture doit donc être simple à utiliser et ludique.

D'autre part, ce type de véhicule doit également être relativement léger afin de pouvoir plus facilement passer partout.

Les systèmes de couverture existants sont soit des toits totalement rigides, soit des capotes, soit des bâches fixées sur des structures rigides.

Tous ces systèmes présentent des inconvénients:
- les toits totalement rigides sont lourds et encombrants quand ils sont démontés,
- les capotes ne sont pas toujours faciles à actionner et elles prennent de la place dans le coffre.

Une capote de véhicule automobile, composé de plusieurs supports rigides pliables et d'une couverture en toile est décrit notamment dans le document DE 39 23 725. Dans ce document, la capote est en plus gonflable. Ce système couverture est lourd, long à régler et nécessite un élément extérieur tel qu'une pompe.

Les bâches fixées sur des structures fixes présentent les inconvénients des deux systèmes précédents et elles sont en plus laborieuses à mettre en place et à régler.

On connaît également des systèmes de couverture gonflable telle que décrit dans le document FR 1 216 440 où le cadre est composé d'une multitude de tubes en matière souple et susceptibles d'être gonflés pour acquérir la rigidité nécessaire pour maintenir la capote en place. Mais ce système nécessite l'utilisation d'un gonfleur ou d'une pompe. Le gonflage est laborieux car pour rendre le cadre suffisamment rigide il faut mettre assez de pression dans les tubes. En effet, si la structure n'est pas assez rigide le toit battra au vent lors du roulage même à basse vitesse. Par ailleurs, ce système présente également l'inconvénient d'être particulièrement fragile, car un simple trou dans la structure suffit à la rendre inutilisable. Le nombre élevé d'éléments composant le cadre alourdi le système de couverture.

La présente invention a pour objet un système de couverture de toit à la fois simple, léger, modulaire, fiable, peu encombrant et moderne, et ne nécessitant pas d'éléments extérieurs tel qu'une pompe. L'invention permet également de changer la configuration et donc l'apparence physique du toit suivant la volonté du propriétaire.

Le système de couverture de toit de véhicule automobile selon l'invention, composé d'au moins un support s'étendant depuis le pare-brise en direction de l'arrière du véhicule et d'une couverture, est caractérisé en ce que lesdits supports sont au nombre de deux et qu'ils sont escamotables en totalité ou en partie.

Selon une variante de l'invention, les supports sont télescopiques, ce qui permet de ranger les supports partiellement ou totalement. En effet, les supports télescopiques étant composés d'éléments emboîtables les uns dans les autres, lorsque ces éléments sont tous emboîtés les uns dans les autres il ne reste plus que l'élément extérieur qui peut être constitué d'un élément de la carrosserie.

Selon une variante de l'invention, les supports sont également démontables, on peut ainsi déposer le toit en totalité et donc alléger le véhicule lorsque l'on souhaite avoir un véhicule le plus léger possible.

Ces supports peuvent éventuellement être rangés dans des évidements prévus à cet effet dans la carrosserie ou dans la longueur de l'habitacle. Quand les supports sont constitués de plusieurs éléments emboîtables ou télescopiques, on peut déposer les supports, les déboîter ou les escamoter les uns dans les autres et les ranger facilement ainsi dans le véhicule, car ils sont alors moins encombrants.

Selon une variante de l'invention, les supports entrent totalement dans des corps creux de la structure du véhicule, comme par exemple les montants avant de porte, les longerons. Les supports disparaissent donc entièrement ou partiellement dans la structure du véhicule sans pour autant prendre de la place utile. Le véhicule reste donc logeable. Afin d'éviter le mouvement de ces supports dans ces corps creux, des guide-tubes y sont installés, ces guides tubes ont une circonférence supérieure à celle des supports.

Selon une disposition particulière de l'invention les supports sont en matériaux souples et flexibles, mais suffisamment rigide pour tenir la couverture. Le matériau est rigide mais suffisamment souple pour pouvoir éventuellement être plié sans être détérioré. Les structures sont donc fermes mais flexibles et elles le restent quelque soit la configuration du véhicule : ouverte ou fermée.

Par ailleurs, dans le cas particulier où les supports sont démontables, l'ensemble supports et bâche, peut être enroulé et placé dans un sac comme cela se fait communément avec les tentes.

Selon une disposition particulière de l'invention, les supports sont en matériaux composites, comme des fibres de carbone, des plastiques ou des résines renforcées fibres de verre.

Selon une variante de l'invention, les supports comportent des éléments de préhension disposés sur l'extrémité libre qui dépasse des corps creux. Quand les supports sont insérés dans les corps creux de la structure, ces supports doivent pouvoir être attrapés par l'utilisateur afin de mettre en place la couverture. Plusieurs types d'éléments de préhension peuvent être imaginés:
- une pièce moulée dont le profil a la forme du haut du pare-brise et disposée au bout du support et encastrée dans un évidement prévu à cet effet,
- une poignée articulée,
- une poignée ovoïde percée d'un trou et comportant une corde reliée au bout du support,
- une poignée escamotable articulée.

Selon une disposition particulière de l'invention, les éléments de préhension servent de moyens de fixation, ce qui permet, lorsque l'on tire le support hors du corps creux, de pouvoir fixer directement ce support à un moyen de fixation placé sur un des cotés du véhicule, sans l'utilisation de pièce intermédiaire.

Selon une disposition particulière de l'invention, les extrémités libres des supports peuvent être fixées à différents endroits de la structure. Le propriétaire peut ainsi attacher ces supports où il souhaite plus ou moins loin sur le véhicule suivant qu'il souhaite couvrir le véhicule en entier ou en partie seulement.

Selon une disposition particulière de l'invention, les supports sont fixés au véhicule à l'avant ou à l'arrière par des moyens de fixation tels que des goupilles, des étaux, des anneaux, des crochets ou similaires.

Dans la variante où les supports sont escamotés dans les corps creux du véhicule, l'utilisateur peut sortir plus ou moins lesdits supports en les bloquant par des étaux et ainsi régler la courbure des supports, lorsqu'ils sont fixés au véhicule.

Selon une disposition particulière de l'invention, la couverture est une bâche fixée aux supports par des moyens démontables tels que des "Velcro®", par des lacets, par des boutons pression ou similaires.

Selon une variante particulière de l'invention, la bâche peut également être tendue le long du support par des cordes fixées à la bâche et mises en tension et ainsi améliorer sa tenue lors du roulage du véhicule. La bâche peut être en plastique moussé semi-rigide, ce qui lui assure une meilleure tenue et ajoute un facteur isolant thermique et plus particulièrement phonique quand on roule.

Selon une variante de l'invention, la couverture est une bâche comportant des raidisseurs placés transversalement à sa longueur. Ces raidisseurs peuvent être rectilignes, en chevron, bombés ou d'une forme quelconque. La bâche étant par principe souple, elle a tendance à se gonfler et à battre lorsque le véhicule roule, ce qui rend celui-ci bruyant en utilisation. Les raidisseurs limitent ces inconvénients.

On peut ainsi fabriquer la bâche dans des matériaux modernes plus légers que les toiles utilisées habituellement pour les capotes.

On peut prévoir de fixer les raidisseurs directement à la bâche. Les nouveaux matériaux rigides peuvent être fixes directement à la bâche par collage, par thermo-collage, voire par une couture. Ces raidisseurs peuvent également être glissés dans des manchons cousus sur la face inférieure de la bâche de façon connue.

Selon une disposition particulière de l'invention, les raidisseurs sont fixés aux supports: ainsi la bâche est maintenue sur les supports à la hauteur de chaque raidisseur, ce qui permet d'assurer une certaine solidarité entre les supports et la bâche et de diminuer le bruit et donc d'améliorer l'agrément d'usage.

Selon une autre caractéristique de l'invention, la couverture est une bâche comportant des éléments transparents fixés à celle-ci par des fermetures à glissières. Ces éléments transparents peuvent donc être retirés à volonté.

D'autres caractéristiques et avantages de l'invention ressortiront plus clairement de la description qui va suivre donnée uniquement à titre d'exemple et faite en se référant aux dessins annexés dans lesquels:
- la figure 1 représente en perspective un véhicule selon l'invention avec la couverture fermée,
- la figure 2 représente en perspective un véhicule selon l'invention avec la couverture fermée à mi-longueur et avec les supports croisés à mi-longueur,
- la figure 3 représente en perspective un véhicule selon l'invention avec la bâche tendue par des cordes,
- la figure 4 représente en perspective un véhicule selon l'invention avec les supports convergeant à l'arrière,
- la figure 5 représente en perspective un véhicule selon l'invention avec les supports encastrés dans les corps creux de la structure,
- la figure 6 représente en perspective un véhicule selon l'invention avec les supports encastrés dans la structure et fixés à l'arrière,
- la figure 7 représente en perspective un véhicule selon l'invention avec les supports équipés de raidisseurs, la bâche avec une partie amovible, et un sac de rangement de la bâche roulée,
- la figure 8 représente en perspective la bâche selon l'invention avec des raidisseurs placés dans des manchons,
- la figure 9 représente la fixation des raidisseurs sur les supports,
- la figure 10 représente la fixation de la bâche sur le haut du pare brise,
- la figure 11 représente un mode de fixation des supports,
- la figure 12 représente un autre mode de fixation des supports,
- la figure 13 représente le détail de l'intégration des supports dans les corps creux de la structure,
- la figure 14 représente à l'échelle agrandie le détail XIV de fixation des supports dans les corps creux représentés à la figure 13,
- la figure 15 représente une poignée de préhension du support,
- la figure 16 représente une deuxième variante de la poignée de préhension du support,
- la figure 17 représente une troisième variante de la poignée de préhension du support,
- la figure 18 représente une quatrième variante de la poignée de préhension du support,
- la figure 19 représente la fixation de la poignée représentée à la figure 18 sur la caisse du véhicule,
- la figure 20 représente un autre moyen de fixation des supports.

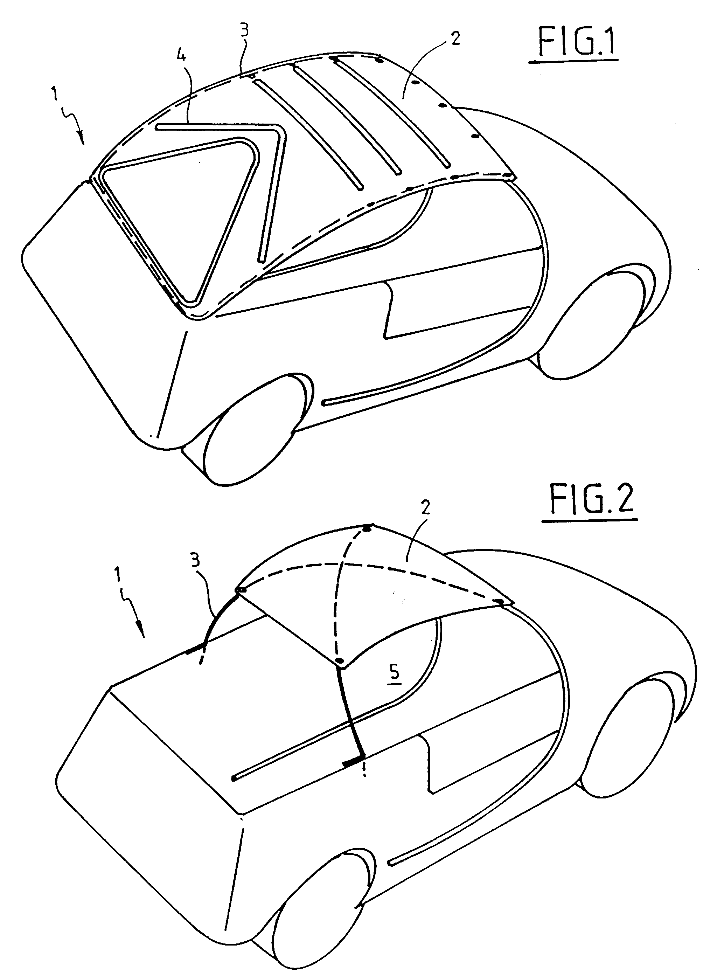

Le véhicule 1, représenté à la figure 1, comporte une bâche 2 et des supports 3 fixés au véhicule. La bâche 2 comprend des raidisseurs 4 ; ces raidisseurs peuvent avoir différentes formes : droite, arrondie ou en chevrons.

Comme on le voit à la figure 2, les supports 3 peuvent être fixés plus ou moins loin à l'arrière du véhicule et croisés, et la bâche 2 peut également ne pas couvrir la totalité de l'espace passagers 5.

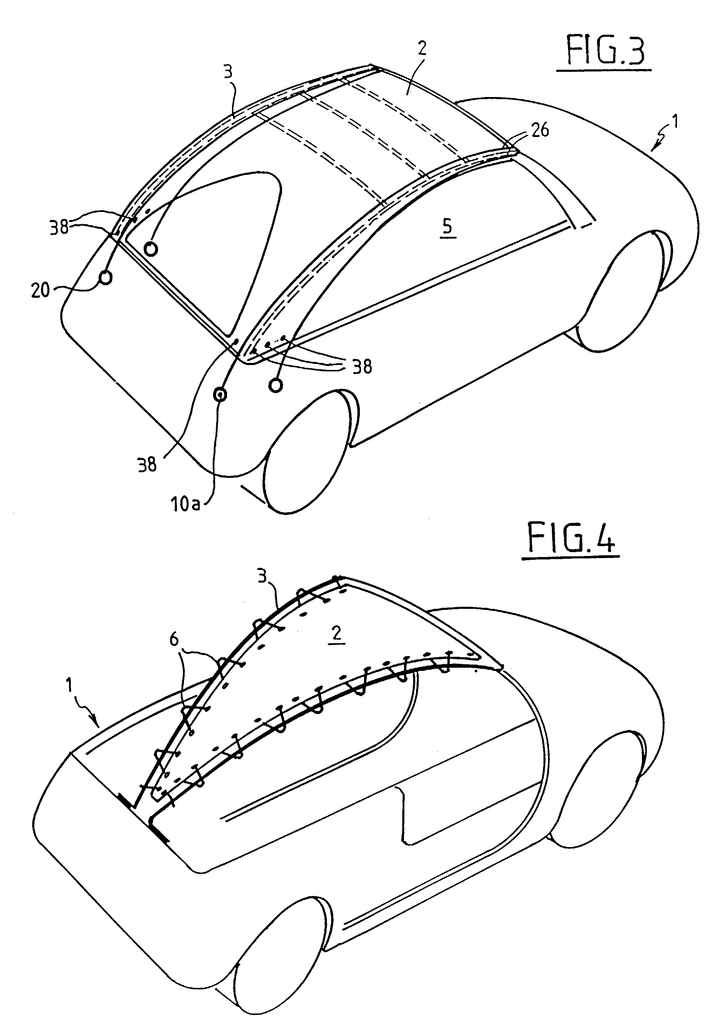

Le véhicule 1 représenté à la figure 3 est totalement couvert par les supports 3 et la bâche 2, les supports 3 étant fixés à l'arrière du véhicule. Ladite bâche est tendue par des cordes 26 rendues solidaires de la bâche de façon connue et elle est maintenue sur les supports 3 par la tension des cordes à la manière des tentes. L'arrière de la bâche 2 est fixé aux cotés du véhicule par des boutons pression 38.

On peut également fixer les supports 3 à l'arrière du véhicule 1 de façon convergente comme représenté à la figure 4.

La bâche 2 est fixée sur les supports par des lacets 6 (cf figure 4).

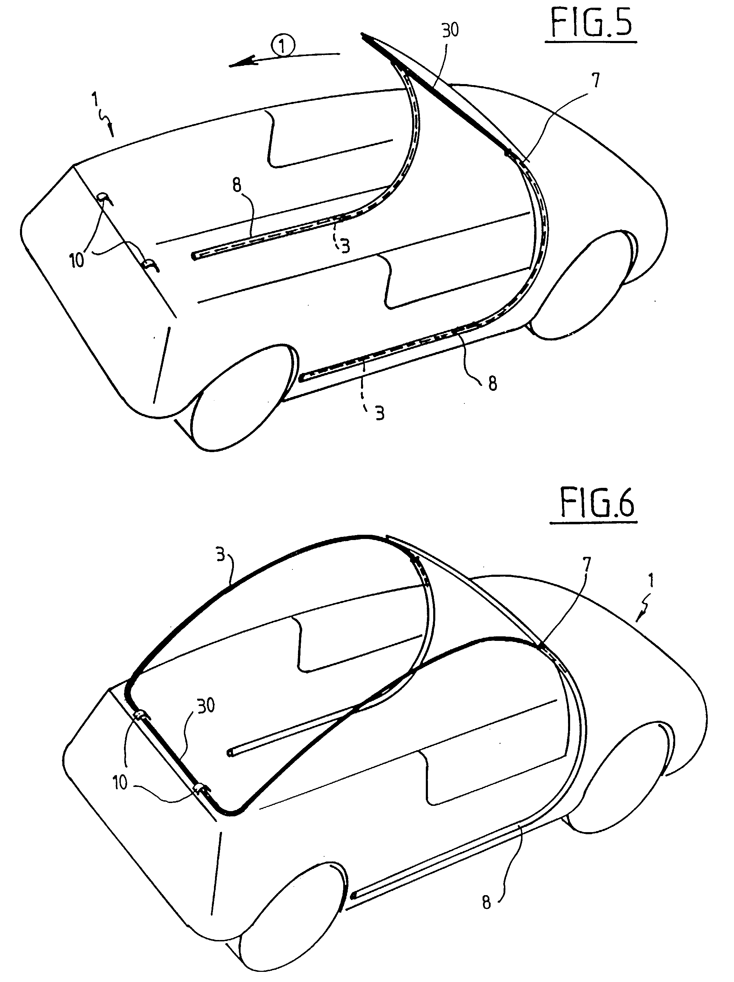

Afin de gagner de la place dans le véhicule quand la couverture est rangée, les supports 3 sont encastrés dans des corps creux 7 de la structure du véhicule, comme les montants de pare-brise (cf figures 5 et 6). Du fait de leur souplesse, les supports 3 peuvent prendre l'arrondi que l'on souhaite et qui correspond à la place disponible dans les corps creux. Afin de bien diriger les supports 3 dans les corps creux 7 et de minimiser les bruits, ceux-ci sont rangés dans des guide-tubes 8.

Dans les figures 5 et 6, les supports 3 sont réunis par une barre de liaison 30 qui peut être plus rigide que les supports 3. Cette barre de liaison sert à la préhension lorsque l'utilisateur souhaite sortir les supports: il lui suffit de tirer la barre selon le mouvement ① et de fixer cette barre à l'arrière du véhicule grâce à des crochets 10 disposés à l'arrière.

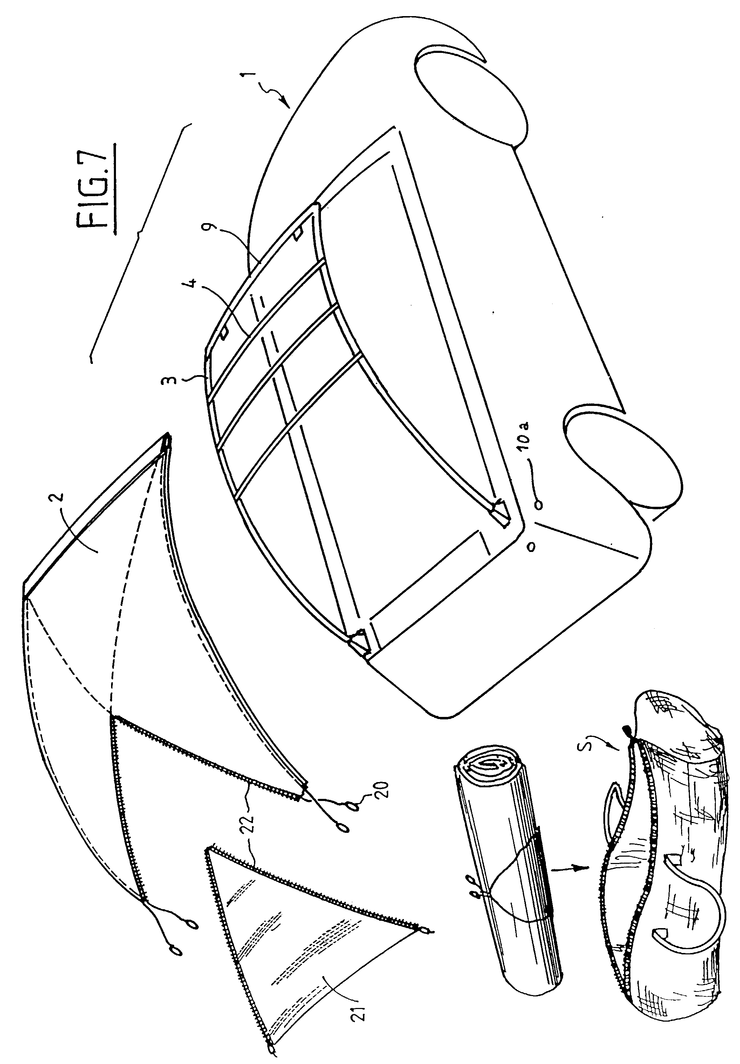

Selon une variante de l'invention représentée à la figure 7, la couverture constituée des supports 3 et de la bâche 2 est montée de la façon suivante:
- les supports 3 sont fixés au véhicule 1 à l'emplacement choisi par l'utilisateur,
- des raidisseurs peuvent être disposés sur les supports ou selon une autre variante être solidaires de la bâche,
- la bâche est fixée au pare-brise 9 de façon connue,
- la bâche est tendue grâce à des anneaux 20 disposés à l'extrémité de câbles de tension et qui sont fixés à des crochets 10a prévus à cet effet,
- l'utilisateur peut s'il le souhaite ajouter des parties transparentes 21 au moyen de fermetures à glissières 22.

Pour démonter la couverture, l'utilisateur procède de la même façon en sens inverse et il peut rouler la bâche 2 sur elle-même avec ou sans les raidisseurs 4 et la ranger dans un sac S prévu à cet effet.

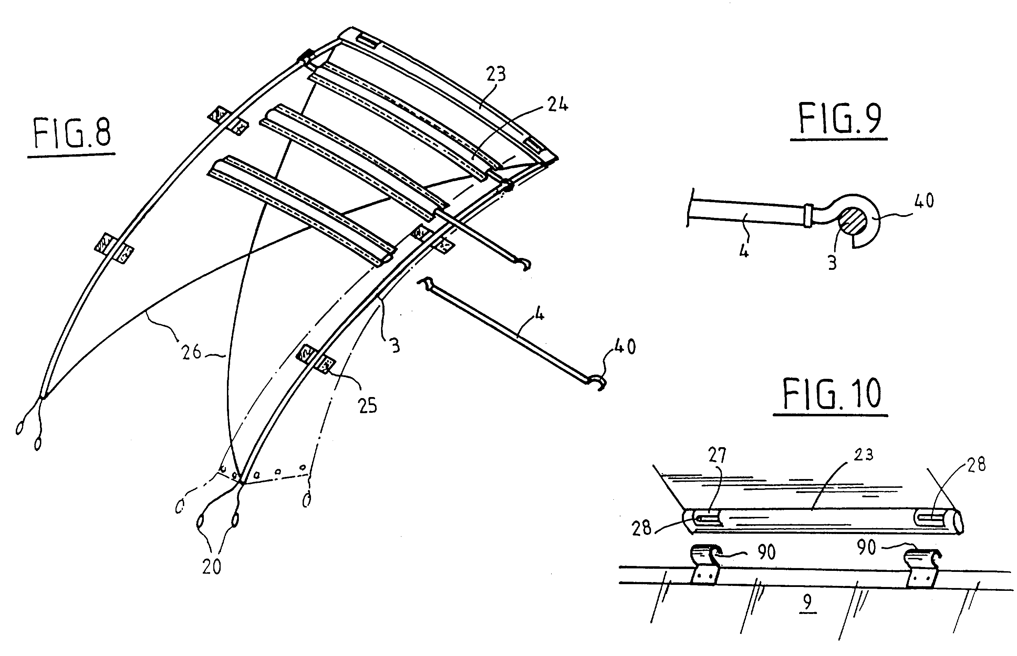

La bâche 2 représentée à la figure 8 se compose d'une partie avant 23 rigide servant à la fixation sur le pare-brise du véhicule, de manchons 24 cousus, de "Velcro®" 25 et de câbles de tension 26 aux bouts desquels se trouvent des anneaux de fixation 20.

Les raidisseurs 4 sont glissés dans les manchons 24 de la bâche 2. Ils peuvent indifféremment être laissés à demeure dans les manchons 24 ou retirés si l'utilisateur souhaite laver la bâche par exemple. Les raidisseurs 4 sont de la même matière que les supports 3 mais on peut également prévoir des raidisseurs 4 en matériaux composites plus légers qui sont alors fixés sur la bâche 2 (variante non représentée).

Les raidisseurs 4 sont fixés aux supports 3 par des crochets 40 comme représenté à la figure 9.

L'avant de la bâche 2, comme on le voit à la figure 10, est fixé au pare-brise de façon connue par la partie rigide 23 qui comporte au moins deux évidements 27 dans lesquels est disposée une barre coopérant avec des crochets 90 disposés sur le haut du pare-brise 9.

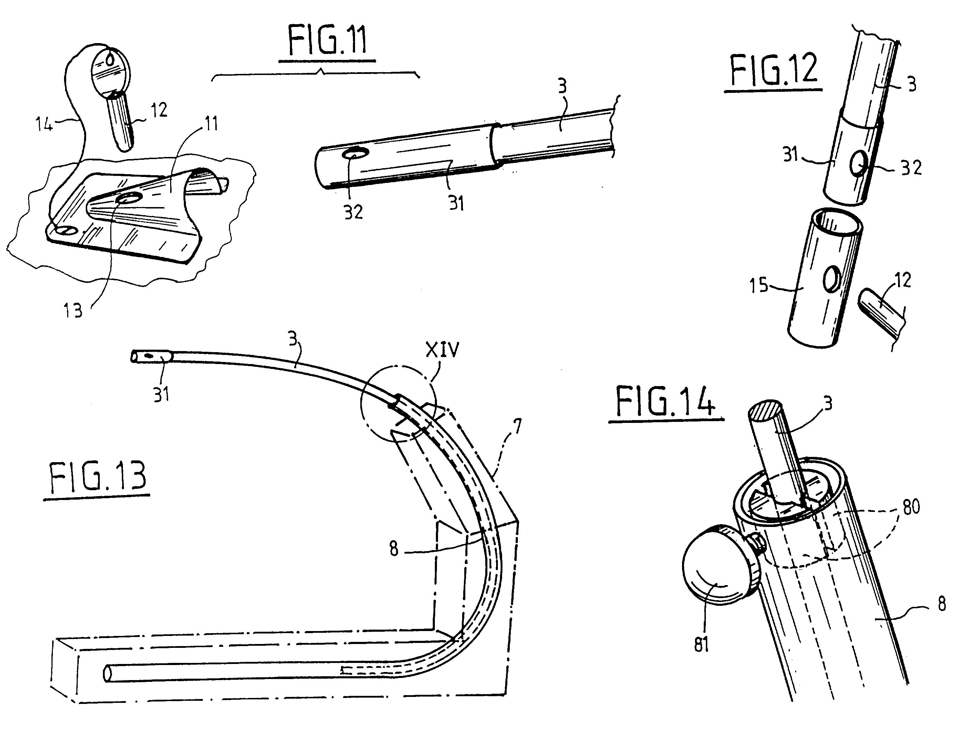

Comme représenté à la figure 11, la fixation des supports 3 au véhicule est assurée par le bout 31 du support 3 qui comporte un trou 32 ; le bout 31 est glissé dans une pièce évasée 11 fixée de façon permanente au véhicule et comportant un trou 13 : lorsque le trou 32 est en face du trou 13, on glisse une goupille 12 qui solidarise ainsi le support avec le véhicule. La goupille est reliée au véhicule par un fil 14.

Selon une autre variante représentée à la figure 12, le support 3 est glissé dans un tube 15 soudé au véhicule et fixé selon le même principe qu'à la figure 11.

La figure 13 représente le détail du parcours du support dans les corps creux du véhicule. Le support 3 est guidé dans les corps creux 7 par des guide-tubes 8 en matière semi-rigide; ces guide-tubes 8 sont fixés aux corps creux 7 de façon connue. Chaque support 3 coulisse librement dans ces guide-tubes 8, et l'utilisateur peut prendre le support 3 par son bout 31 qui comporte un moyen de préhension.

La figure 14 est le détail XIV de la figure 13, qui représente la fixation du support 3 dans le guide-tube 8. Le support 3, qui coulisse librement dans les guide-tubes 8 doit pouvoir être fixé afin de tenir son extrémité et de régler la courbure du support quand la couverture est en place. Pour réaliser cette fixation, le guide tube comporte un étau composé de deux demi-cylindres 80 placés à l'intérieur du guide 8, ces deux demi-cylindres sont serrés par l'action d'une vis 81 qui traverse le guide 8 et comprime l'un des deux demi-cylindres contre l'autre.

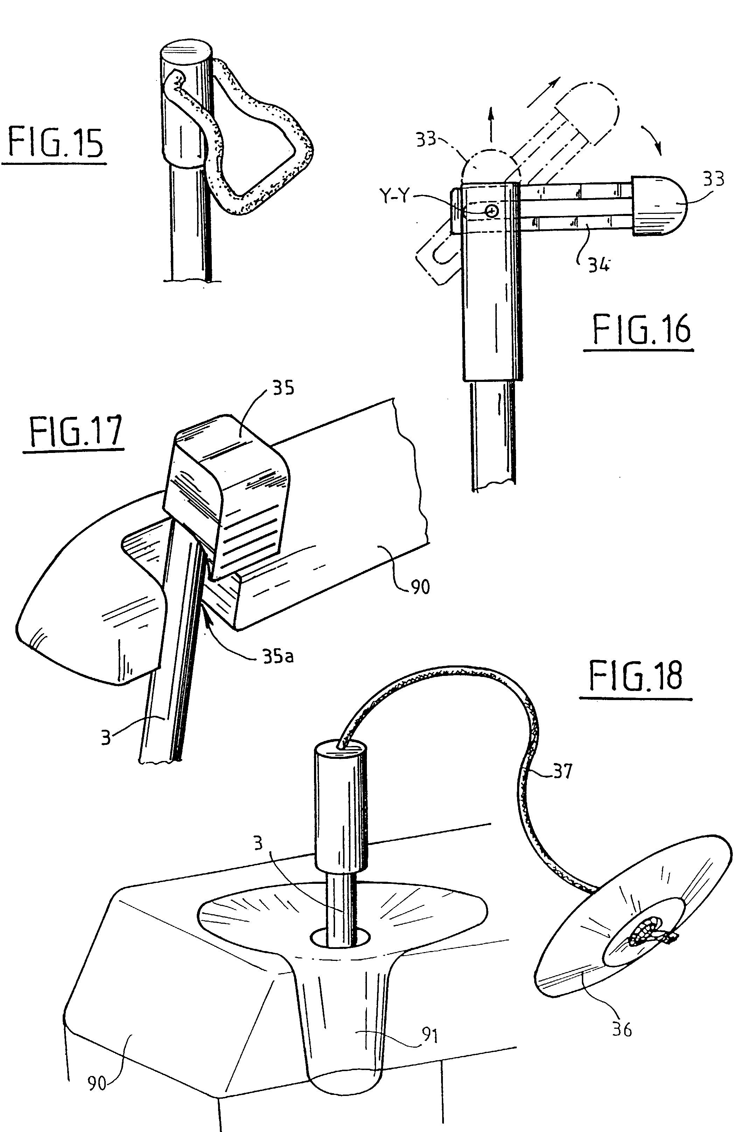

Les figures 15, 16, 17 et 18 représentent différents moyens de préhension du support 3 nécessaires à sa manipulation.

La figure 15 représente une poignée articulée classique.

Le type représenté à la figure 16 est articulé et escamotable: on tire la tête 33 vers le haut, puis on fait pivoter le pied 34 autour d'un axe YY faisant ainsi apparaître une poignée.

La figure 17 représente une autre variante de moyen de préhension 35 encastrée dans le haut du pare-brise 90. Sa forme extérieure, qui correspond au profil du haut du pare-brise 90, est moulée sur le support 3. Un évidement 35a est prévu en partie basse afin de pouvoir y glisser ses doigts.

Le quatrième type de moyen de préhension représenté à la figure 18 est constitué d'un pommeau 36 de forme ovoïde percé d'un trou dans lequel est glissée et nouée l'extrémité d'une ficelle 37. L'autre extrémité de la ficelle 37 est fixée à l'extrémité du support 3. Quand le support 3 est inséré dans le corps creux du véhicule, il tombe par son propre poids et maintient le pommeau 36 dans un évidement 91 en forme de T ou de I et prévu à cet effet dans le haut du pare-brise 90. Cet évidement présente une partie supérieure en creux de forme complémentaire au pommeau 36 et qui se prolonge vers le bas le long de la face interne du haut du pare-brise 90. Pour tirer le support 3 hors de l'évidement 91, il suffit de saisir le pommeau 36 par le pied de l'évidement 91 qui est ouvert.

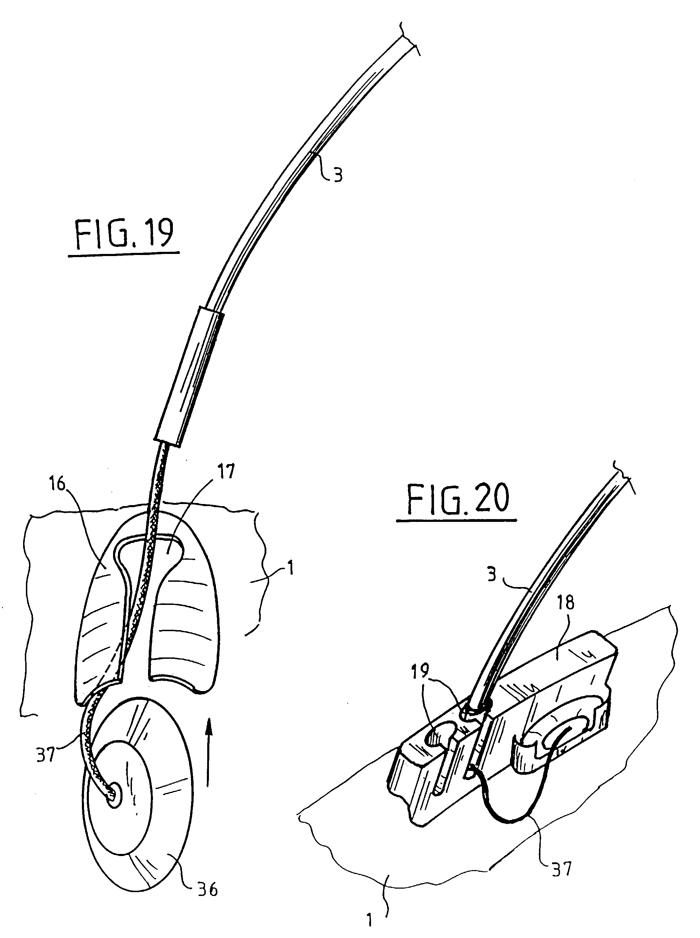

Ce pommeau peut également servir de moyen de fixation comme on le voit à la figure 19: le pommeau est glissé sous une forme 16 fixée de façon connue à la caisse du véhicule 1. La forme 16 qui est bombée présente un évidement 17 en I ou en T qui permet de laisser passer la ficelle 37. La rigidité du support 3 a tendance à tirer vers le haut le pommeau 36 qui est donc ainsi maintenu en place dans la forme 16.

La figure 20 représente un autre moyen de fixation des supports 3. Comme lesdits supports sont rigides, ils ont tendance à vouloir se redresser, et en les glissant dans des évidements 19 disposés dans des pièces 18 fixées au véhicule 1, on peut empêcher leur redressement. Ces évidements 19 sont prévus suffisamment profonds pour maintenir ainsi les supports 3. La mise en tension de la bâche 2 concourt également au maintien des supports 3 en les plaquant vers le bas.

## Revendications

1. Système de couverture de toit de véhicule automobile, composé d'au moins un support (3) s'étendant depuis le pare-brise en direction de l'arrière du véhicule et d'une couverture (2), caractérisé en ce que lesdits supports (3) sont au nombre de deux et sont escamotables en totalité ou en partie.

2. Système de couverture de toit de véhicule automobile selon la revendication 1, caractérisé en ce que lesdits supports (3) sont télescopiques.

3. Système de couverture de toit de véhicule automobile selon la revendication 1 ou 2, caractérisé en ce que lesdits supports (3) sont également démontables.

4. Système de couverture de toit de véhicule automobile selon l'une quelconque des revendications précédentes, caractérisé en ce que lesdits supports (3) entrent dans des corps creux (7) de la structure du véhicule.

5. Système de couverture de toit de véhicule automobile selon l'une quelconque des revendications 1 à 4, caractérisé en ce que lesdits supports (3) sont souples et flexibles.

6. Système de couverture de toit de véhicule automobile selon l'une quelconque des revendications précédentes, caractérisé en ce que les supports (3) sont en matériau composite.

7. Système de couverture de toit de véhicule automobile selon l'une des revendications 4, 5 ou 6, caractérisé en ce que les supports (3) comportent des éléments de préhension (33, 35, 36) qui dépassent des corps creux (7).

8. Système de couverture de toit de véhicule automobile selon la revendication 7 caractérisé en ce que les éléments de préhension (36) servent de moyen de fixation (36).

9. Système de couverture de toit de véhicule automobile selon l'une quelconque des revendications 5 à 8, caractérisé en ce que les extrémités libres (31) des supports (3) peuvent être fixées à différents endroits de la structure.

10. Système de couverture de toit de véhicule automobile selon l'une quelconque des revendications précédentes, caractérisé en ce que les supports (3) sont fixés au véhicule par des moyens de fixation tels que des goupilles (12), des étaux (80), des anneaux (20), ou des crochets.

11. Système de couverture de toit de véhicule automobile selon l'une quelconque des revendications précédentes, caractérisé en ce que la couverture (2) est une bâche fixée aux supports (3) par des moyens démontables tels que des "Velcro®" (25), des lacets (6), des boutons pression (38).

12. Système de couverture de toit de véhicule automobile selon l'une quelconque des revendications précédentes, caractérisé en ce que la couverture (2) est une bâche tendue le long de chaque support (3) par des cordes (26) fixées à ladite bâche et mises en tension.

13. Système de couverture de toit de véhicule automobile selon l'une quelconque des revendications précédentes, caractérisé en ce que la couverture (2) est une bâche comportant des raidisseurs (4) placés transversalement à sa longueur.

14. Système de couverture de toit de véhicule automobile selon la revendication 13, caractérisé en ce que les raidisseurs (4) sont fixés aux supports (3).

15. Système de couverture de toit de véhicule automobile selon l'une quelconque des revendications précédentes, caractérisé en ce que la couverture (2) est une bâche comportant des éléments transparents (21) fixés à celle-ci de façon amovible comme par des fermetures à glissières (22).
